# EUROPÄISCHE PATENTSCHRIFT

(11) **EP 0 407 546 B1**
(45) Veröffentlichungstag und Bekanntmachung des Hinweises auf die Patenterteilung: **20.10.1993**
(21) Anmeldenummer: 90902110.7
(22) Anmeldetag: 26.01.1990
(51) Int. Cl.: B09B 1/00, C04B 28/00, E02D 3/12

(54) **VERFAHREN ZUR VERFESTIGUNG UND/ODER ABDICHTUNG VON ALTDEPONIEN VON ABFALLSTOFFEN**
PROCESS FOR CONSOLIDATING AND SEALING OLD REFUSE DUMPS
PROCEDE DE CONSOLIDATION ET/OU D'ETANCHEIFICATION D'ANCIENS DEPOTS DE DECHETS

(30) Priorität: 27.01.1989 AT 163/89
(43) Veröffentlichungstag der Anmeldung: 16.01.1991
(73) Patentinhaber: KELLER GRUNDBAU GmbH, D-63067 Offenbach (DE); TECHFORM ENGINEERING AG, CH-8105 Watt (CH)
(72) Erfinder: HAYDEN, Rudolf, A-4813 Altmünster (AT); HEINSKY, Heinz, A-1040 Wien (AT)
(74) Vertreter: Pfeifer, Otto, Dipl.-Ing.
(86) Internationale Anmeldenummer: AT9000012
(87) Internationale Veröffentlichungsnummer: WO9008605

(56) Entgegenhaltungen:
- EP-A- 0 157 749
- EP-A- 0 168 638
- EP-A- 0 216 751
- EP-A- 0 280 753
- WO-A-86/01439
- WO-A-88/02739
- DE-A- 3 330 897
- DE-A- 3 526 508
- DE-A- 3 644 766

## Beschreibung

Gegenstand der vorliegenden Erfindung ist ein Verfahren zur Verfestigung und/oder Abdichtung von Altdeponien von Abfallstoffen, den sogenannten Altlasten, beliebiger Zusammensetzung und Herkunft, Tiefe und Ausdehnung, unter Verwendung bekannter Deponiebindemittel.

Soweit sich die einschlägige Technik mit dem vorstehend angeführten Gebiet bisher befaßt hat, kann beispielhaft auf folgende Literaturstellen verwiesen werden:

In der DE-A1-35 26 508 wird ein Verfahren zur Abdichtung einer Lagerung von Metallkationen enthaltenden Abfallen im Boden beschrieben, bei welchem die Lagerung dadurch isoliert wird, daß wenigstens eine Barriere oder Abschirmung zur Abdichtung und zum Zurückhalten von Schwermetallkationen ausgebildet wird, indem in die Hohlräume des Bodens oder in die Felsspalten des die Lagerung umgebenden Erdbodens eine Brühe eingefüllt oder injiziert wird, welche auf 1.000 Gewichtsteile Wasser 60 bis 500 Gewichtsteile Zement, 25 bis 500 Gewichtsteile Ton und 0 bis 800 Gewichtsteile eines natürlichen oder künstlichen siliziumhaltigen Produktes enthält. Gemäß dieser Offenlegungsschrift wird der zu injizierenden Brühe außerdem zum Zurückhalten der Schwermetallkationen eine Mischung aus 2 bis 60 Gewichtsteilen Natriumcarbonat, 0,5 bis 20 Gewichtsteilen eines alkalischen Metallpyrophosphates und/oder eines alkalischen Metalltartrates zugesetzt.

In der EP-A1-0 060 902 wird eine Methode zum Füllen und gleichzeitigem Abdichten oberirdischer Deponien mit Abfallmaterialien aus Kraftwerken und Heizanlagen beschrieben, in welchem Verfahren eine hochkonzentrierte Suspension von Flugaschen in Wasser oder ein Gemisch einer solchen Suspension mit Industrieschlacken oder anderen festen Abfallmaterialien auf die Deponien verbracht wird.

In der EP-A1-0 208 871 wird schließlich ein Verfahren zur Herstellung auslaugfester Agglomerate aus feinteiligen Abfallstoffen beschrieben, in welchem man ein hydraulisches Bindemittel in Wasser unter Zwangsmischen so lange aufschließt, bis es im wesentlichen nicht mehr sedimentiert, die so erhaltene wäßrige kolloidale Lösung mit den feinteiligen Abfallstoffen vereinigt und dabei den Wassergehalt des Gemisches auf eine agglomerierfähige Konsistenz einstellt, das Gemisch unter Bewegen agglomeriert und anschließend härtet.

Die derzeitige Situation der Aballwirtschaft läßt sich dahingehend beschreiben, daß die Sorgen der modernen Zivilisation um Müll oder Abfallstoffe im allgemeinen längst nicht mehr nur die verantwortlichen Politiker drücken. Die Bewältigung der Probleme als Teil des Umweltschutzes rief neue Industriezweige hervor und brachte Entwicklungen in Gang, die vergleichbar sind mit der Errichtung von öffentlichen Wasserversorgungs- und Kanalanlagen.

Was die Arten der anfallenden Abfallstoffe anlangt, so kann die Unterteilung oder Systematisierung der vielfältigen Müllarten nach verschiedenen Gesichtspunkten erfolgen,
z.B.
nach dem Ort der Entstehung (Hausmüll, Industrie- oder Gewerbemüll, Spitalsmüll, etc.)
nach Primär- und Sekundärabfallstoffen, d.h. unbehandelter (Frisch-)Müll und Rückstände aus Müllentsorgung wie Schlacke nach Müllverbrennung, Klärschlamm, usw.
nach organischen und anorganischen Stoffen
nach umweltneutralen und imweltgefährdenden Abfallstoffen
nach Verfahren der Müllbeseitigung.

Was die Praxis der Müllbeseitigung betrifft, so erreicht die Müllabführ flächendeckend eine hohe Effizienz, Kanalisationsanlagen leiten Schmutzwässer in die vielen Kläranlagen, die in den vergangenen Jahrzehnten errichtet worden sind. Die Beseitigung von Müll und Klärschlamm beschränkt sich noch immer vielerorts auf Ablagerung in Deponien. Diese werden meist derart angelegt, daß sie auf lange Zeit keine Gefahr für die Umwelt bilden sollten. Häufig werden aber noch Deponien beschickt, die sich zu Zeitbomben für Umgebung und Grundwasser entwickeln.

Verbrennungsanlagen sind erst ab bestimmter Kapazität wirtschaftlich zu führen, erfordern aufwendige Rauchgaswäschen und produzieren Sekundär-Abfallstoffe, deren Entsorgung ungelöst ist.

Erst eine Sortierung des Mülls ermöglicht eine weitgehend ungefährliche Wärmegewinnung, ferner die Rückgewinnung von Rohstoffen, Kompostierung und kontrollierbare Deponien.

Nur in Einzelfällen gelingt es, eine 100%ige Entsorgung ohne Nachfolgeprobleme zu erreichen. Sie ist sehr oft nicht finanzierbar. Dennoch muß dem Stand der Technik folgend ein Höchstmaß an Sicherheit angestrebt werden.

Eine interessante Entwicklung läßt der Einsatz von Deponiebindemitteln erwarten. Sie wirken vorzugsweise auf hydraulischer Basis, sind selbst umweltfreundlich und besitzen ob ihrer Mahlfeinheit eine sehr große spezifische Oberfläche. Sie binden Schadstoffe zu weitgehend unlöslichen Verbindungen und gestatten daher die Endlagerung von zahlreichen Problemstoffen auf gesicherten Deponien. Zugleich verfestigen Deponiebindemittel verdichteten Primär und Sekundärmüll und ermöglichen fallweise, derart gebundenen Müll zu Baustoffen zu verarbeiten, die beispielsweise im Straßenbau für Tragschichten oder Lärmschutzanlagen eingesetzt werden können.

Viele (Alt-)Müll-Ablagerungen treten erst durch Baumaßnahmen (Straßenbau, Aushub für Fundamente,U-Bahnbau, Rohrleitungsbau usw.) zu Tage. Andere sind ihrer Lage und gegebenenfalls ihrer Zusammensetzung nach bekannt. Sie wurden mit Erdreich abgedeckt, nachdem sie nicht mehr beschickt worden waren. Mulden wurden teilweise oder zur Gänze aufgefüllt, Halden angelegt. Oft sind nur einige Kubikmeter Abfall in einem Wald, in einem Graben oder dgl. abgeleert worden - sogenannte wilde Deponien, auf die man stößt. Nach Regenfällen und der Schneeschmelze sickert Wasser in die Müllhalde, wandert in den Untergrund und kann laufend oder erst nach Jahrzehnten das Grundwasser beeinflussen. Diese Wasser enthalten häufig anorganische Verbindungen wie Nitrate, Chloride, Sulfate, Karbonate oder Phosphate. Durch Industriemüll können toxische Substanzen auftreten (z.B. Arsen- und Cyanverbindungen), die selbst in geringer Konzentration erhebliche Gefahren für Grund- und Oberflächenwasser darstellen. Müll ist auch Lebensraum zur Ratten und Insekten. Schließlich sei auf Schwelbrände hingewiesen, die durch Erwärmung infolge des mikrobiellen Abbaues der organischen Substanzen entstehen. Die Gasentwicklung kommt auch nach Jahrzehnten nicht zum Stillstand und stellt eine weitere Gefahrenquelle für die Umwelt dar. Insgesamt ticken erkannt oder unerkannt Zeitzünderbomben, die es zu entschärfen gilt.

Bei bekannten Verfahren zur Sanierung von Altlasten werden die genaue Lage der Deponien, die Zusammensetzung der Ablagerung und die Beschaffenheit des Untergrundes durch Versuchsbohrungen erhoben. Es ist zu entscheiden, ob der Abfall an eine geordnete Deponie verbracht werden muß oder eine Sanierung an Ort und Stelle erfolgen kann. Bei dichtem Untergrund (Tegel, Granit) kann es sich als wirtschaftlich erweisen, die gesamte Deponie mit einer Dichtwand (Schmalwand, Schlitzwand) zu umschließen, die Sickerwässer zu sammeln und zu entsorgen. Die Oberfläche wird mit Humus abgedeckt, soweit dies nicht schon früher geschehen ist. Eine weitere Methode ist die Umlagerung in situ. Hiezu wird die Deponie aufgearbeitet, teilweise sortiert und mit Bindemittel vermischt wieder abgelagert. Dieser Weg erfordert einen großen Zeitaufwand und verursacht hohe Kosten, da die Vermischung bisher nur chargenweise und außerhalb der Deponie möglich war.

Das erfindungsgemäße Verfahren zielt nun darauf ab, durch systematisches Einpressen von geeigneten Deponiebindemitteln unter hohem Druck in die Hohlräume der Müllablagerung eine Verfestigung der Abfallstoffe zu erzielen, zugleich einen Wassereintritt und eine Wasseraufnahme zu minimieren und die Gefahr einer weiteren Eluierung von Schadstoffen zu bannen.

Zur Erreichung dieses Zieles schlägt die Erfindung ein Verfahren der eingangs genannten Gattung vor, wonach mittels eines Bohrrohres, an dessen Bohrkopf orthogonal zur Bohrrichtung sich eine oder mehrere Düsen befinden, Bindemittel als Suspension durch Bewegung des Bohrrohres in radialer und/oder achsialer Richtung in den Deponiekörper eingespült wird und unter intensiver Vermischung mit den Abfallstoffen gleichzeitig die Hohlräume im Deponiekörper aufgefüllt werden.

Es hat sich gezeigt, daß eine Tonne Frischmüll 4 - 5 m³ Deponieraum beansprucht; durch Verdichtung und Setzung vermindert sich zwar das Hohlraumvolumen erheblich, bleibt aber in einer Größenordnung erhalten, die die oben beschriebenen Prozesse der Ümweltgefährdung ermöglicht. Werden diese Hohlräume nach dem erfindungsgemäßen Verfahren dauerhaft verschlossen, sodaß Wasser- und Luftzutritt unterbunden sind, so kommen die chemisch-biologischen Vorgänge weitestgehend zum Stillstand und verlieren ihre bedrohliche Wirkung auf die Unwelt.Durch das eingepreßte Bindemittel wird die Verfestigung der gesamten Anschüttung erreicht und eine kalkulierbare Tragfähigkeit des Bodens hergestellt. Das erfindungsgemäße Verfahren bietet auch die Möglichkeit, unterhalb des Müllkörpers einen dichten Horizont auszubilden, sodaß in situ eine völlige Abkapselung der Deponie gegenüber der Umgebung erzielt werden kann, ohne eine Umlagerung vornehmen zu müssen.Die Abdichtung kann unabhängig von der Hohlraumverfestigung erfolgen, sodaß eine Deponiesanierung in Etappen möglich ist.

Das erfindungsgemäße Verfahren arbeitet nach dem Prinzip der Hochdruckbodenvermörtelung, einer Technik, die seit Jahren im städtischen Tiefbau angewendet wird, beispielsweise zur Baugrubenumschließung, Tiefgründung bestehender Bauwerke,zum Tunnelvortrieb und im Kanalbau.Eine fahrbare Lafette trägt ein Bohrrohr, an dessen Spitze orthogonal zur Bohrachse eine oder mehrere Düsen angeordent sind.

Das Bohrgestänge wird bei gleichzeitiger Drehbewegung abgeteuft, während durch die Düse(n) Deponiebindemittel in Form einer Suspension unter hohem Druck (bis 1.200 bar) in die anstehende Deponie gepreßt wird.

Durch die intensive Vermischung des Bodens=Mülls mit der Suspension infolge der Bewegung des Bohrgestänges in radialer und achsialer Richtung und des hohen Auspreßdruckes wird die Umhüllung der Abfallstoffe mit dem Deponiebindemittel erzielt. Hohlräume werden entweder gänzlich verfüllt oder es entstehen geschlossene Zellen.

Soll eine Abdichtung des Deponiekörpers zum Untergrund hin gefordert sein, so wird die Bohrung in den Mutterboden geführt und die Suspension - den Bodenverhältnissen augepaßt - mit dichtenden Zusätzen erweitert.

Die praktische Arbeitsweise des erfindungsgemäßen Verfahrens kann wie folgt ablaufen:

Wenn die Untersuchungen hinsichtlich Ausdehnung, Mächtigkeit, Beschaffenheit und Hohlraumgehalt der Deponie sowie Untergrund eine Beurteilung der Probleme und Zusammenhänge zulassen und das gegenständliche Verfahren zum Einsatz kommen soll, ist einerseits die Zusammensetzung der Suspension (des Deponiebindemittels) zu fixieren, andererseits ist ein Bohrraster über die zu sanierende Fläche zu legen, der den Abstand und die Tiefe der Bohrungen bestimmt. Die Aufstellung der mobilen Misch- und Dosieranlage, Zufahrtsmöglichkeit und Wasseranschluß sind gleichfalls zu berücksichtigen.

Für das Verfahren selbst bietet sich vorzugsweise das Einfachrohrgestänge an (Primärverfahren). Am Bohrrohr wird die Suspension zur Düse gefördert, tritt unter Druck bis 1.200 bar (nach örtlichem Erfordernis) aus und wirkt als Schneidstrahl auf die umgebenden Abfallstoffe. Der Druck ist an der Düse am größten und vermindert sich mit der Entfernung in Abhängigkeit vom Boden, sodaß der Bohrraster ein gewisses Übergreifen bzw. Ineinandergreifen der benachbarten Einspülungen berücksichtigen muß. Über den wirksamen Radius einer Bohrung kann nur in Kenntnis der Deponieverhältnisse befunden werden, als Größenordnung kann ein Bereich von 0,8 - 2,5 m genannt werden. Im Gegensatz zum Primärverfahren arbeitet das Sekundärverfahren mit einem Mehrfachrohrgestänge, das den gleichzeitigen Einsatz von Wasser, Luft und Suspension gestattet. Ferner kann beim Abteufen der Boden mittels Wasserstrahl aufgeschnitten werden, wodurch die Feinteile mit dem Wasser durch das Gestänge an die Oberfläche gelangen; erst während des Ziehens wird die Suspension eingespült. In diesem Fall muß das austretende Schmutzwasser gesammelt und geklärt werden.

Als Bindemittel kommen vorzugsweise zementfeingemahlene Hochofenschlacken, Flugaschen, Steinmehle (Blainewerte〉5.000) mit geringem Anteil an vorzugsweise Trikalziumaluminat-freiem Portlandzement zur Anwendung. Für Abdichtungen werden Bentonit mit Steinmehl und Hochofenzement bevorzugt. Diesbezügliche Erfahrungen weisen durchwegs positive Resultate auf.

Es kann vorteilhaft sein, in den Abfallstoffen vorliegende, die Erhärtung der zur Verfestigung zugesetzten hydraulischen Bindemittel störende Verbindungen zuvor in unschädliche Calciumverbindungen überzuführen. Diese Überführung in unschädliche Calciumverbindungen wird zweckmäßig durch Zusatz von Calciumnitrat, Calciumchlorid, Calciumoxid und/oder Calciumhydroxid vorgenommen, wobei vorteilhaft 1 bis 30%, insbesondere 1 bis 20%, besonders bevorzugt 1 bis 10%, bezogen auf trockenen Abfallstoff und berechnet als CaO, zugesetzt werden. Diese Überführung in unschädliche Calciumverbindungen kann beispielsweise im Zuge des zuvor erwähnten Sekundärverfahrens erfolgen, indem beim Abteufen mit einer Wasser-Kalziumhydroxid-Suspension gearbeitet wird. Gemäß einer bevorzugten Variante des erfindungsgemäßen Verfahrens wird beim Abteufen Reaktionsmittel in den Boden eingespült, um Schwermetalle, insbesondere Quecksilber, in unlösliche Verbindungen zu überführen, und um ferner die Erhärtung des Deponiebindemittels sicherzustellen, das beim Hochziehen des Bohrrohres in den Boden gepreßt wird.
Die Auflockerung des Deponiegutes und die Einspülung der Suspension wird zweckmäßig mit einem Pumpendruck von 5 bis 1.000 bar, vorzugsweise von 25 bis 800 bar, insbesondere von 100 bis 400 bar erreicht.

In vorteilhafter weiterer Ausgestaltung des erfindungsgemäßen Verfahrens können zur Anpassung der Erstarrungszeit des Bindemittels an die gegebenen Bedingungen entsprechende Zusätze verwendet werden. Die Zugabe eines Fließmittels, eines Verflüssigers, eines Luftporenmittels und/oder eines Stabilisators kann zu weiteren notwendigen Verbesserungen und Modifizierungen führen.
Eine Verbesserung der Penetrationsfähigkeit und/oder Beständigkeit des Mörtels und/oder der Suspension wird durch Zugabe von Kunststoffzusätzen, vorzugsweise auf Acrylat- und/oder Styrolbutadienbasis, erreicht.

Wie bereits erwähnt, hat die Entwicklung von Deponiebindemitteln bzw. deren Angebot am Markt neue Aspekte der Müllbeseitigung eröffnet. Das erfindungsgemäße Verfahren erschließt eine weitere Anwendungsmöglichkeit dieser Bindemittel in der Abfallwirtschaft.

## Patentansprüche

1. Verfahren zur Verfestigung von Mülldeponien, insbesondere Altdeponien, beliebiger Zusammensetzung und Herkunft, Tiefe und Ausdehnung unter Verwendung bekannter Bindemittel, dadurch gekennzeichnet, daß mittels eines Bohrrohres, an dessen Bohrkopf orthogonal zur Bohrrichtung sich eine oder mehrere Düsen befinden, Bindemittel als Suspension durch Bewegung des Bohrrohres in radialer und/oder achsialer Richtung mit einem Pumpendruck von 5 bis 1.000 bar in den Deponiekörper eingespült wird und unter intensiver Vermischung mit den Abfallstoffen gleichzeitig die Hohlräume im Deponiekörper aufgefüllt werden.

2. Verfahren nach Anspruch 1, dadurch gekennzeichnet, daß die Auflockerung des Deponiegutes und die Einspülung der Suspension mit einem Pumpendruck von 25 bis 800 bar, insbesondere von 100 bis 400 bar erreicht wird.

3. Verfahren nach Anspruch 1 oder 2, dadurch gekennzeichnet, daß zur Erzielung einer Abdichtung des Deponiekörpers gegenüber dem Untergrund die Bohrung in den Mutterboden geführt wird und die Suspension unter Zugabe von dichtenden Zusätzen mit den durch den Schneidstrahl aufgelösten Bodenteilchen vermischt wird und nach dem Erhärten eine wasserundurchlässige Schicht ausgebildet wird.

4. Verfahren nach einem der Ansprüche 1 bis 3, dadurch gekennzeichnet, daß das Bindemittel oder die Suspension einen die Erstarrungszeit des Bindemittels den gegebenen Bedingungen anpassenden Zusatz enthält.

5. Verfahren nach einem der Ansprüche 1 bis 4, dadurch gekennzeichnet, daß die Ausfüllung der Hohlräume und die Verfestigung der Abfallstoffe mit hydraulisch erhärtendem Bindemittel, vorzugsweise auf Basis eines Portlandzementes erhöhter Sulfatbeständigkeit mit feingemahlener Hochofenschlacke oder Flugasche oder Steinmehl mit Anteilen bis zu 80%, oder eines hydraulisch erhärtenden Kalkes und/oder mit Bentonit vorgenommen wird.

6. Verfahren nach einem der Ansprüche 1 bis 5, dadurch gekennzeichnet, daß der Suspension ein Fließmittel, ein Luftporenmittel und/oder ein Stabilisator zugegeben wird.

7. Verfahren nach einem der Ansprüche 1 bis 6, dadurch gekennzeichnet, daß der Suspension zur Verbesserung der Penetrationswirkung und/oder Beständigkeit ein Kunststoffzusatz, vorzugsweise auf Acrylat- und/oder Styrol/Butadien basis, zugegeben wird.

8. Verfahren nach einem der Ansprüche 1 bis 7, dadurch gekennzeichnet, daß in den Abfallstoffen vorliegende,die Erhärtung des hydraulischen Bindemittels störende Verbindungen in unschädliche Kalziumverbindungen übergeführt werden.

9. Verfahren nach Anspruch 8, dadurch gekennzeichnet, daß die Überführung in unschädliche Kalziumverbindungen durch Zusatz von Kalziumnitrat, Kalziumchlorid, Kalziumoxid und/oder Kalziumhydroxid erfolgt.

10. Verfahren nach Anspruch 9, dadurch gekennzeichnet, daß 1 bis 30 %, insbesondere 1 bis 20 %, besonders bevorzugt 1 bis 10 %, bezogen auf trockenen Abfallstoff und berechnet als CaO, zugesetzt werden.

11. Verfahren nach einem der Ansprüche 1 bis 10, dadurch gekennzeichnet, daß in den Abfallstoffen vorliegende Schwermetalle und/oder Schwermetallverbindungen mit beim Abteufen in den Deponiekörper eingespülten Reaktionsmitteln in unlösliche Verbindungen übergeführt werden.

## Claims

1. Method of consolidating refuse disposal sites, in particular old disposal sites, of any composition and origin, depth and size using known binders, characterized in that, by means of a drilling pipe on whose drilling head one or more nozzles are mounted orthogonally to the drilling direction, binder is injected as a suspension into the disposal site body at a pump pressure of 5 to 1,000 bar by moving the drilling pipe in the radial and/ or axial direction and the cavities in the disposal site body are filled while being intensively mixed with the waste materials.

2. Method according to Claim 1, characterized in that the loosening of the disposal site material and the injection of the suspension is achieved with a pump pressure of 25 to 800 bar, in particular of 100 to 400 bar.

3. Method according to Claim 1 or 2, characterized in that, to achieve a sealing-off of the disposal site body from the subsoil, the drilling is conducted into the top soil and the suspension is mixed with the soil particles loosened by the cutting jet with the addition of sealing additives and, after setting, a water-impermeable layer is formed.

4. Method according to one of Claims 1 to 3, characterized in that the binder or the suspension contains an addition which matches the setting time of the binder to the existing conditions.

5. Method according to one of Claims 1 to 4, characterized in that the filling-up of the cavities and the consolidation of the waste materials are carried out with a hydraulically setting binder, preferably based on a Portland cement having enhanced sulphate resistance and containing finely ground blast-furnace slag or fly ash or stone dust in proportions of up to 80%, or of a hydraulically setting lime and/or with bentonite.

6. Method according to one of Claims 1 to 5, characterized in that a flow agent, an air-pore agent and/or a stablizer are/is added to the suspension.

7. Method according to one of Claims 1 to 6, characterized in that, to improve the penetration action and/or the resistance, a polymer addition, preferably with an acrylate and/or styrene/butadiene base, is added to the suspension.

8. Method according to one of Claims 1 to 7, characterized in that compounds which are present in the waste materials and interfere with the setting of the hydraulic binder are converted into harmless calcium compounds.

9. Method according to Claim 8, characterized in that the conversion into harmless calcium compounds is carried out by adding calcium nitrate, calcium chloride, calcium oxide and/or calcium hydroxide.

10. Method according to Claim 9, characterized in that 1 to 30 %, in particular 1 to 20 %, particularly preferably 1 to 10 %, based on dry waste material and calculated as CaO, are added.

11. Method according to one of Claims 1 to 10, characterized in that heavy metals and/or heavy-metal compounds present in the waste materials are converted into insoluble compounds with reactants injected into the disposal site body during the sinking.

## Revendications

1. Procédé pour la consolidation de dépôts de déchets, notamment de vieux dépôts de déchets de n'importe quelle composition et origine, profondeur et extension en utilisant des liants connus, caractérisé en ce que l'on asperge au moyen d'un tube alésé, sur la tête d'alésage duquel orthogonalement à la direction d'alésage se trouve une ou plusieurs tuyères, un liant sous forme de suspension par déplacement du tube alésé dans la direction radiale et/ou axiale avec une pression de pompage de 5 à 1000 bars dans le corps de déchets et sous mélange intensif avec les déchets en ce que l'on remplit simultanément les espaces creux dans le corps de déchets.

2. Procédé selon la revendication 1, caractérisé en ce que l'on obtient le foisonnement du produit de déchets et le rinçage de la suspension avec une pression de pompe de 25 à 800 bars, notamment de 100 à 400 bars.

3. Procédé selon la revendication 1 ou 2, caractérisé en ce que pour l'obtention d'une étanchéification du corps de déchets par rapport au sous-sol, le perçage est conduit dans la terre mère et la suspension est mélangée en ajoutant des additifs d'étanchéité avec les particules de terre détachées par le jet tranchant et l'on forme une couche étanche à l'eau après le durcissement.

4. Procédé selon l'une des revendications 1 à 3, caractérisé en ce que le liant ou la suspension contient un additif adaptant le temps de solidification du liant aux conditions données.

5. Procédé selon l'une des revendications 1 à 4, caractérisé en ce que le remplissage des espaces creux et la consolidation des déchets avec un liant durcissant hydrauliquement, de préférence à base de ciment de Portland d'une résistance élevée au sulfate avec des scories de haut fourneau finement broyées ou des cendres volatiles ou des produits de meulage avec des proportions allant jusqu'à 80 % ou d'une chaux durcissant hydrauliquement et/ou avec de la bentonite.

6. Procédé selon l'une des revendications 1 à 5, caractérisé en ce que l'on ajoute un fluidifiant, un produit entraîneur d'air ou aérateur et/ou un stabilisateur à la suspension.

7. Procédé selon l'une des revendications 1 à 6, caractérisé en ce que l'on ajoute à la suspension pour améliorer l'effet de pénétration et/ou la résistance un additif de matière synthétique, de préférence à base d'acrylate et/ou de styrol butadiène.

8. Procédé selon l'une des revendications 1 à 7, caractérisé en ce que les composés présents dans les déchets et entravant le durcissement du liant hydraulique sont transformés en composés calcium non nocifs.

9. Procédé selon la revendication 8, caractérisé en ce que la transformation en composés calcium non nocifs s'effectue par addition de nitrate de calcium, de chlorure de calcium, d'oxyde de calcium et/ou d'hydroxyde de calcium.

10. Procédé selon la revendication 9, caractérisé en ce que l'on ajoute 1 à 30 %, notamment 1 à 20 %, notamment de façon préférée 1 à 10 % rapportés aux déchets secs et calculés comme CaO.

11. Procédé selon l'une des revendications 1 à 10, caractérisé en ce que les métaux lourds et/ou les composés de métaux lourds présents dans les déchets sont transformés en composés insolubles avec les produits réactionnels introduits lors du creusage dans les corps de déchets.
